# EUROPEAN PATENT SPECIFICATION

(11) **EP 2 849 350 B1**
(45) Date of publication and mention of the grant of the patent: **12.06.2019**
(21) Application number: 13780946.3
(22) Date of filing: 24.04.2013
(51) Int. Cl.: H04B 1/59, H05K 7/20, B61L 3/12, G08G 1/09

(54) **MARKER FOR MOBILE COMMUNICATION**
MARKER FÜR MOBILE KOMMUNIKATION
MARQUEUR POUR DES DISPOSITIFS DE COMMUNICATION MOBILE

(30) Priority: 26.04.2012 JP 2012100538
(43) Date of publication of application: 18.03.2015
(73) Proprietor: Hitachi, Ltd., Tokyo 100-8280 (JP)
(72) Inventor: UEKI, Yosuke, Tokyo 100-8280 (JP); OHUCHI, Naoki, Tokyo 100-8280 (JP); ARATAMA, Yuya, Tokyo 100-8280 (JP); MATSUSHIMA, Kiyoto, Tokyo 100-8280 (JP); KOWATARI, Takehiko, Tokyo 100-8280 (JP)
(74) Representative: Mewburn Ellis LLP
(86) International application number: PCT/JP2013/062013
(87) International publication number: WO 2013/161856

(56) References cited:
- JP-A- H11 258 330
- JP-A- H11 258 330
- JP-A- 2001 036 260
- JP-A- 2001 272 211
- JP-A- 2002 190 689
- JP-A- 2002 190 689
- JP-A- 2009 212 059
- JP-A- 2009 239 041
- JP-A- 2011 155 078
- US-A1- 2008 158 817
- US-A1- 2011 180 915

## Description

### Technical Field

The present invention relates to a marker which is a ground-fixed type wireless communication unit to be used for wireless communication with a mobile body such as an automobile or a railway vehicle, and specifically, relates to a mounting structure of an electric circuit board for suppressing temperature change of the board loaded on the marker.

### Background Art

As a marker for mobile communication, for example, a road surface fixed-type marker to be used in communication with automobiles is known. As such ground-fixed type marker, techniques disclosed in Patent Literature 1 and Patent Literature 2 are provided.

Patent Literature 1 discloses providing a marker having superior antishock resistance, by configuring the marker by laminating, on an upper surface of a radome material at an upper portion of an antenna stored inside the marker, an impact absorbing material with a dielectric constant lower than the dielectric constant of the radome material.

Patent Literature 2 discloses achieving adsorption of impact applied to the marker, and inhibiting rainwater and the like from entering inside the marker from an opening unit, by blocking the opening unit of the marker with a first lid fitted to a stepped unit, and by blocking a gap between an outer peripheral surface of the first lid and an inner peripheral surface of the opening unit with a second lid.

### Citation List

### Patent

### Literature

[PTL 1] Japanese Patent Laid· Open Publication No. 11·258330
[PTL 2] Japanese Patent Laid·Open Publication No. 2003·209490
   JP H11 258330 discloses a responder case.
   US2011/0180915 discloses an electronic device and a method of manufacturing the same.

### Summary of Invention

### Technical

### Problem

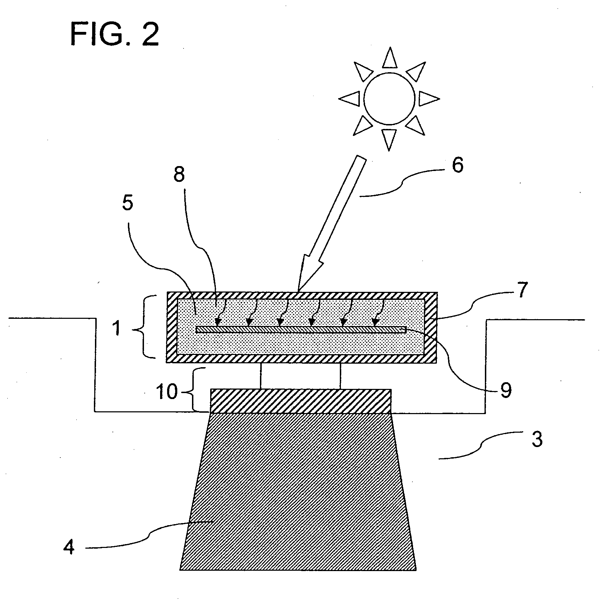

Explanation will be given on the problem to be solved by the present invention, with reference to FIG. 2. A marker 1 shown in FIG. 2 is a generalized marker of the markers disclosed in Patent Literatures 1 and 2.

A major portion of the marker 1 is installed in an outdoor environment where there is no roof. Therefore, the marker 1 is exposed to solar radiation 6 from the sun. A part of the solar radiation 6 is reflected on an upper surface unit of a casing 7, but the remaining solar radiation energy is absorbed by a casing material and converted to heat, and raises a surface temperature of the casing. According to estimation by the present inventors, the casing surface temperature reaches 100 °C or higher, depending on a combination of a material characteristics of the casing and an environment of the installed marker. The heat is transferred to an electric circuit board 9 by heat conduction 8 via the casing 7 and a material 5 covering the board, and consequently raises the temperature of the electric circuit board 9. On the other hand, during nighttime, a phenomenon that the casing surface temperature becomes lower than outdoor air temperature occurs, from heat radiation from the upper surface of the casing 7 to the sky. That is, a variation of the casing surface temperature becomes greater than a variation of the outdoor air temperature in one day. If the variation of the casing surface temperature is transmitted to the inside of the marker, the electronic circuit board 9 will also be exposed to severe temperature variation.

In a case where the marker is placed in a severe environment in which the temperature variation becomes significant, there is a problem that a deterioration of lifetime of electronic components or soldered joint units on the electronic circuit board 9 occurs. Further, during high temperature in the daytime, there is a possibility that the electric circuit performs abnormal operation from heat.

As measures for the problem of temperature variation of the electronic circuit board accompanying the variation of the casing surface temperature, it is conceivable to use a material having low thermal conductivity such as an urethane foam material as the material 5 covering the board. However, on the other hand, the electronic components loaded on the board itself generate heat, and it is necessary to dissipate the heat generated by the electronic components to the outside of the casing. Therefore, in a structure where the board is covered with a material with low thermal conductivity, it becomes difficult to dissipate the heat generated by the electronic component to outside the casing.

The present invention aims at providing a marker capable of protecting the board from the temperature variation caused by the solar radiation 6 and radiative cooling at the upper surface of the casing 7, and radiating the heat generated from the electronic components mounted on the board to the outside of the marker efficiently.

### Solution to Problem

In order to solve the above-mentioned problem, for example, a configuration disclosed according to claim 1 is adopted. The present application contains a plurality of means for solving the above-mentioned problem, and one example thereof is a marker for mobile communication installed on ground, characterized in that the marker has an insulating layer such as an air layer or a vacuum layer or a foam material layer or a fiber material layer between an electronic circuit board and an upper portion of a casing, and that the lower side portion from the electronic circuit board is configured from only a material with larger heat conductivity than the insulating layer.

The "insulating layer" in the present application is not limited to the air layer, the vacuum layer, the foam material layer, the fiber material layer, or a layer configured from a member with remarkably high heat insulating effect, but in a broad sense, widely includes a material with lower heat conductivity than the member arranged to a lower side from the electronic circuit board. Advantageous Effects of Invention

It becomes possible to provide a marker capable of suppressing the temperature variation of the electronic circuit board caused by the solar radiation and the radiative cooling, and radiating the heat generated from the electronic components mounted on the board to outside the marker with good efficiency. Brief Description of Drawings

FIG. 1 is a perspective view of an installation mode of a marker for automobile.
FIG. 2 is a cross-sectional view taken at line A-A' in FIG. 1 of a conventional marker.
FIG. 3 is an exploded view of the marker according to one mode of Embodiment 1 of the present invention.
FIG. 4 is a perspective view of the marker viewed from an upper surface side thereof according to one mode of Embodiment 1 of the present invention.
FIG. 5 is a perspective view of the marker viewed from a lower surface side thereof according to one mode of Embodiment 1 of the present invention.
FIG. 6 is a cross-sectional view taken at line B-B' in FIG. 4 of the marker according to one mode of Embodiment 1 of the present invention.
FIG. 7 is a cross-sectional view taken at line B-B' in FIG. 4 of the marker according to one mode of Embodiment 2 of the present invention.
FIG. 8 is a cross-sectional view of the marker according to one mode of Embodiment 3 of the present invention.
FIG. 9 is a cross-sectional view of the marker according to one mode of Embodiment 4 of the present invention.
FIG. 10 is a schematic diagram showing a wireless communication between the marker and an antenna on a vehicle side.

### Description of Embodiments

Various embodiments will be explained below with reference to accompanying drawings.

### Embodiment 1

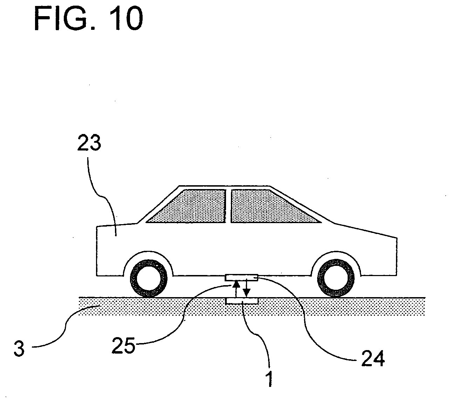

Explanation will be given on a wireless communication between a marker and a vehicle, taking an automobile as an example of a mobile body, with reference to FIG. 10. A marker 1 fixed on a road surface performs a wireless communication 25 with an on-vehicle antenna 24 loaded on a vehicle 23 passing thereabove. For example, in a case where the marker 1 is installed on a toll road or the like, it is possible for the marker 1 to receive information such as the type of the vehicle, the entered toll gate and the like from the vehicle 23, to compute a toll information calculated from these information, for example, and to transmit the same to the vehicle 23. By doing so, it becomes possible to collect a fare without stopping the vehicle 23. Further, it becomes possible to transmit information of a speed limit of a traveling section or an information of a curve or intersection on a route and the like to the vehicle 23, process these information at the vehicle 23 side, and notify the same as visual information or voice information to a driver, or make the vehicle 23 decelerate automatically to a safe speed after comparing the same with the speed and acceleration of the vehicle 23. As is explained above, the wireless communication in mobile communication is required to have high reliability, since it is frequently used in managing money transfers or improvement of safety.

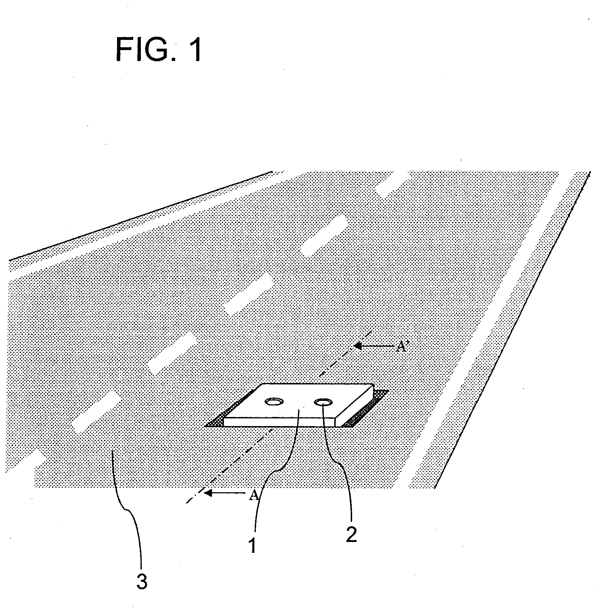

An installation mode of the marker on the road surface is shown in FIG. 1. As is shown in FIG. 1, a major portion of the marker 1 is installed outdoors, so that the temperature of the marker 1 becomes higher than an outdoor temperature from direct sunlight during daytime, and becomes lower than the outdoor temperature from radiative cooling during nighttime. As such, the marker is exposed to extremely severe temperature cycle environment. If this temperature cycle reaches an electronic circuit board inside the marker, there is a possibility that a life duration of electronic components inside the marker or soldered joint units on the electronic circuits may decrease, and also there is a possibility that an abnormal operation of the electronic circuit occurs if the temperature increase of the electronic circuit board becomes extremely high from solar radiation during the daytime.

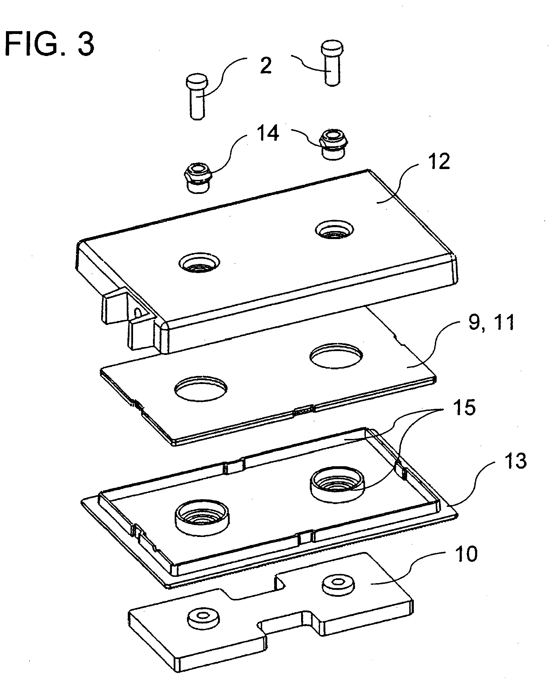

FIG. 3 is an exploded view of the marker according to the present embodiment. The marker 1 is equipped with an upper casing unit 12 configuring an upper surface and side surfaces, a lower casing unit 13 configuring a lower surface, an electronic circuit board 9 loaded with an electronic component and a wireless communication antenna, and an insert 14 for fixing a bolt, which is directly molded to the upper casing unit 12.

The upper casing unit 12 and the lower casing unit 13 serve a purpose of protecting the electronic circuit board 9 and the antenna existing inside thereof from external environment, and is configured from a hard material such as a FRP (Fiber Reinforced Plastic) which is a fiber-reinforced resin material, taking into consideration an electric wave permeability in wireless communication and a strength against vibration and crushing. Further, the electronic circuit board 9 is sealed so that the whole surface is covered by a rubber-like board sealing resin 11. Since the marker is fixed with respect to a mount 10 by a bolt 2, the lower surface of the marker does not directly contact the road surface or a base. A fixing method of the mount 10 to the road surface or the base may be a method of directly fastening to the road surface or the base via the bolt, or may be a method of fixing with a belt in a case of the base.

At an inner side of the lower casing unit 13, an inner wall 15 is provided each to an outer peripheral unit and to a bolt piercing unit. When manufacturing the marker, the electronic circuit board 9 is first installed to the lower casing unit 13 while maintaining a gap between an inner bottom surface of the lower casing unit 13, and thereafter, the board sealing resin 11 is directly casted in a fluidized state, thereby making it possible to fix the electronic circuit board 9 in a state closely contacting the lower casing unit 13, and to cover the whole surface of the electronic circuit board 9 with the board sealing resin 11. Thereafter, the upper casing unit 12 and the lower casing unit 13 fixed with the electronic circuit board 9 are matched, and the marker and the mount 10 are fixed with the bolt 2 and the insert 14 for fixing the bolt. When matching the upper casing unit 12 and the lower casing unit 13, it becomes possible to configure the marker having a space between an inner upper surface of the upper casing unit 12 and the board sealing resin 11.

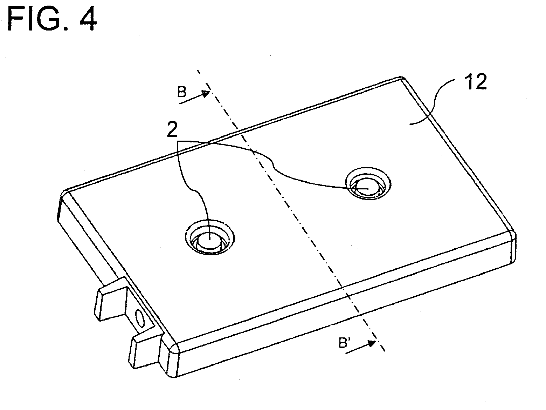

FIG. 4 shows a perspective view of the marker seen from an upper surface side thereof. The marker has two piercing units for fixing the marker and the mount 10 with the bolts 2. Further, the side surface of the marker has a connector for connecting the marker and a superior ground device with a communication wire, and both side surfaces of the connector are equipped with projecting units. When a vehicle passes the marker, foreign matters on the road surface collide thereto by being flicked by tires and the like. Therefore, by having such projecting units, it becomes possible to prevent the foreign matters from colliding to a connecting portion between the marker and the communication wire and damaging the connecting portion.

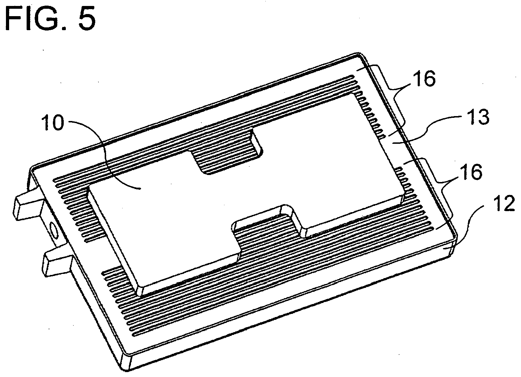

FIG. 5 shows a perspective view of the marker seen from a lower surface side. As is shown in FIG. 5, the lower casing unit 13 is provided with an unevenness unit 16. The unevenness unit is designed to increase a surface area of the lower side surface of the casing, and to improve a heat radiation effect from a lower side portion of the marker. Further, the lower casing unit 13 is arranged so as to enter into an inner side of a side surface unit of the upper casing unit 12. With such configuration, it becomes possible to make it difficult for rainwater to enter the interior of the marker. Further, if the mount 10 is configured to cover the whole surface of the lower casing unit 13, there is fear that the radiation performance from the lower side surface of the lower casing unit 13 is deteriorated. Therefore, the mount 10 is configured to cover a section of the lower casing unit 13.

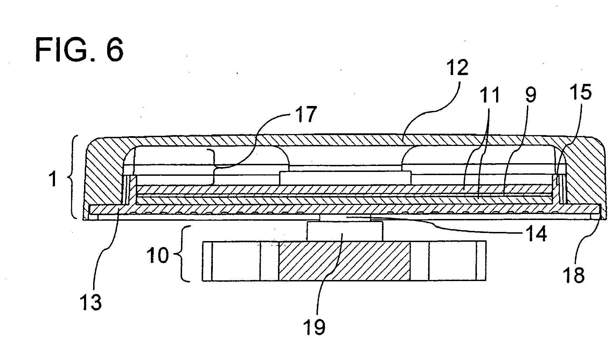

FIG. 6 shows a cross-sectional view taken at B-B', when the marker is cut between B-B' shown in FIG. 4. In FIG. 6, the shaded area indicates a cut surface. As is shown in FIG. 6, a space 17 is provided between the upper casing unit 12 and the board sealing resin 11 covering the electronic circuit board 9.

The space 17, that is, an air layer (which may be a gas layer other than air) functions as an insulating layer as it is, and is capable of effectively suppressing heat conduction from the upper surface unit of the marker which becomes hot by solar radiation to the electronic circuit board 9. It is possible to make the space 17 function as the insulating layer, for example, by installing heat insulating material such as an urethane foam or a glass wool and the like. Further, it is possible to further improve an insulating effect than that of the air layer, by making the space to a vacuum state. In this case, it is not easy to obtain a complete vacuum state, so that it is possible to exert a larger insulating effect than that of the air layer, by filling the air layer with a lower air pressure than the atmospheric pressure or other gas.

Such structure is effective not only in protecting the electronic circuit board 9 from the temperature rise from the solar radiation during daytime, but also in protecting the electronic circuit board 9 from the temperature drop from the radiative cooling during nighttime.

On the other hand, the electronic circuit board 9 contacts the lower casing unit 13 via the board sealing resin 11, so that the heat conduction with the lower surface side of the marker becomes larger compared to that of the upper surface side of the marker. In the day time, the lower surface side of the marker is in the shade, so that there is no fear that the surface temperature of the lower surface side of the marker rises by direct sunlight, unlike the case for the upper surface side. The temperature rise during daytime of the road surface or the base becomes large, since the road surface or the base is exposed to direct sunlight. However, the lower surface of the marker does not contact the road surface or the base directly from the mount 10, and most part of the lower surface of the marker is configured to contact the outer air, therefore, there is little effect of heat conduction from the road surface or the base which became hot. As such, the temperature change of the lower side of the marker is similar to ambient temperature change of the surroundings. Therefore, it is preferable to load the electronic circuit board 9 to a lower side of the marker 1. The mount 10 is equipped with a projecting unit 19 at a bolt joining portion, and a space is provided between the lower surface of the marker and the mount 10 by the projecting unit 19 when the mount 10 is fixed to the marker. By providing a space between the lower surface of the marker and the mount 10, it becomes possible to secure a radiation effect from the lower surface of the marker.

The problems to be considered in addition to the temperature rise from solar radiation are the heat generation by elements mounted on the electronic circuit board. The marker basically operates only during passing of the vehicle, so that there is small possibility that regular heat generation from element occurs. However, in a case where the vehicle stops in a state in which the on-vehicle antenna position and the marker position coincides, wireless electric supply by the on-vehicle antenna continues, and there is a possibility that the heat generation by the elements loaded to the marker increases. Supposing that the board is covered by the same material as the insulating layer, the effect of suppressing the temperature rise of the board from solar radiation improves, but it has the opposite effect in radiating heat generated by the element. Therefore, by adopting a rubber-like polyurethane-based potting agent with high thermal conductivity (at least having higher thermal conductivity than the insulating layer) and the like as the board sealing resin 11, it becomes possible to effectively dissipate the heat to the outside of the element, and to suppress rise in element temperature during heat generation. It is necessary to eventually dissipate the heat from the board sealing resin 11 to the outside of the marker. As is explained above, the temperature of the upper surface side of the marker becomes high from the solar radiation, so that it is preferable to aim at radiating heat from the lower surface side of the casing in which the temperature is comparatively low. Further, the electronic circuit board 9 and the inner side surface of the lower casing unit 13 are closely contacted by the board sealing resin 11. By adopting the structure of the present embodiment, it becomes possible to perform heat radiation effectively from the lower side of the marker, since the electronic circuit board 9 is closer to the lower surface of the marker than the upper surface thereof, and since no insulating layer is provided to the lower side of the electronic circuit board 9.

The thickness of the board sealing resin 11 is preferably set to be as thin as possible, taking into consideration a height of the electronic components mounted on the electronic circuit board 9, fluidity of the sealing resin during manufacturing, and a relationship between moisture permeability and thickness and the like. By making the thickness of the sealing resin thin, loading position of the board further approximates the lower surface of the casing, and the heat radiation performance from the lower surface improves further. Therefore, even in a case where the electronic components mounted on the electronic circuit board 9 generates heat, the marker 1 of the present configuration is capable of radiating heat effectively from the lower surface side of the casing 7 the temperature of which is low.

Further, if materials with high dielectric loss exist in the surroundings or in the vicinity of the antenna, power loss becomes large and the wireless communication performance decreases. Therefore, it is necessary to give attention to a mounting structure of the antenna upon designing, but especially in a case where the antenna is mounted on to the electronic circuit board, and a material with high dielectric loss is used for the board sealing resin 11, there is a possibility that the wireless communication performance decreases largely, since the antenna and the material with high dielectric loss closely contact each other. Therefore, by making the thickness of the sealing resin thin, it becomes possible to perform the wireless communication of the antenna loaded to the electronic circuit board 9 satisfactorily.

Further, there are cases where debris interrupting wireless communication, such as powder of asphalt, iron powder, or water droplets, adhere to the upper surface of the marker. In some cases, there is a possibility that the marker 1 is flooded. In such case, compared to the case where the antenna is set to the upper surface side of the marker casing, the present structure is capable of securing large distance between the antenna loaded to the electronic circuit board 9 and the debris adhering to the upper surface of the marker. Therefore, it becomes possible to further reduce the attenuation amount of the electric wave.

Further, since the marker is installed slightly above the road surface, there is a possibility that the foreign matters collide to the lower surface of the marker 1, by being flicked by tires and the like during passing of the vehicle. Even in this case, by adopting the present structure of covering the lower side of the marker with the lower casing unit 13, it becomes possible to protect the electronic circuit board 9 from the collision of the foreign matters, since the lower surface side of the casing is covered with hard material.

Further, in order to prevent moisture and the like from entering inside the marker, it is desirable that an end of contacting surface unit 18 of the upper casing unit 12 and the lower casing unit 13 takes a configuration to be at the lower surface side of the marker to which raindrops do not directly fall. That is, it is desirable that the lower casing unit 13 is arranged so as to enter to the inner side of the side surface unit of the upper casing unit 12.

Further, to the lower surface side of the marker of the lower casing unit 13, the unevenness unit 16 may be provided, as is shown in FIG. 5, so as to increase the surface area thereof, and to aim at improving the heat radiation effect from the lower side portion of the marker. Further, the lower side from the wireless communication antenna does not become a transmitting surface of the communication radio wave. Therefore, metal materials such as aluminum alloy with higher thermal conductivity may be used for the lower casing unit 13.

The marker in the above-explained embodiment is capable of significantly reducing the heat conduction from the upper surface unit of the casing to the electronic circuit board 9, with the insulating layer provided between the upper surface unit of the casing and the electronic circuit board 9 sealed with resin. By doing so, it becomes possible to substantially suppress the temperature rise of the electronic circuit board, even in a case where the marker is placed under high solar radiation environment such as in low-latitude region, thereby making it possible to improve robustness of the marker.

Also, during nighttime, the surface temperature of the marker becomes lower than the ambient temperature from heat radiation from the casing to the outside, and in such case, it becomes possible to substantially suppress the heat conduction from the electronic circuit board to the upper surface of the casing with the above-explained insulating layer. As a result, it becomes possible to further reduce the temperature variation of one day to which the electronic circuit board is exposed. Thereby, it becomes possible to improve the lifetime of the electronic components or the soldered joint units mounted on the electronic circuit board, contributing to enhancement of long-term reliability of the marker, even in a case where the marker is installed to an environment with severe temperature environment.

On the other hand, by configuring the lower surface side of the casing from the electronic circuit board with material having larger heat conduction than that of the insulating layer, without providing the above-mentioned insulating layer, it becomes possible to effectively release heat generated by the electronic circuit components from the lower surface of the casing to which no direct solar radiation reaches.

Further, in a case where the electronic circuit board is sealed with a resin superior in heat conduction, with the aim of improving heat conduction to the lower surface of the casing, it is possible to reduce the energy absorbed by the board sealing resin, by taking a structure in which a part of or all of the antenna for wireless communication is separated from the electronic circuit board and is not sealed by the resin.

### Embodiment 2

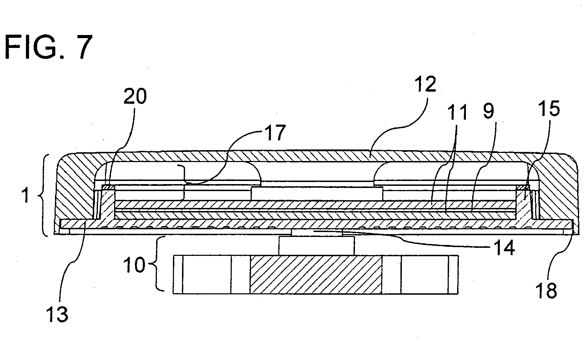

In Embodiment 1, the structure of FIG. 6 in which the antenna for wireless communication is loaded to the electronic circuit board 9 is adopted. In Embodiment 2, the structure shown in FIG. 7, in which the antenna for wireless communication is changed to a separated antenna 20 and is separated from the electronic circuit board 9, is adopted. Other structure and manufacturing method are the same as that in Embodiment 1.

In the structure of Embodiment 1, the board sealing resin 11 is filled even on the antenna for wireless communication. Some of the resin material used for the purpose of sealing the board has large dielectric loss. Therefore, in a case where a resin with large dielectric loss is adopted in the structure of Embodiment 1, wireless power loss is large, and there is a possibility that reliability of the wireless communication deteriorates.

In such case, as is shown in FIG. 7, it is desirable to change the antenna for wireless communication to the separated antenna 20, and to adopt a structure in which the antenna is separated from the electronic circuit board 9. As an installing position of the separated antenna 20, a method of fixing the same to the upper casing unit 12 is conceivable, however, the marker of the present embodiment has the electronic circuit board 9 installed to the lower casing unit, so that the wiring between the electronic circuit board 9 and the separated antenna 20 or an assembly method thereof becomes complicated. Therefore, it is desirable that the separated antenna 20 is installed to the lower casing unit 13, and a method of fixing the separated antenna 20 to an outer side or at an upper portion of the inner wall 15 is most appropriate. Especially, when the latter method of fixing the separated antenna 20 to the upper portion of the inner wall 15 is adopted, it becomes possible to offset the height of an antenna plane and the height of the board sealing resin 11, so the effect of suppressing wireless power loss becomes large.

### Embodiment 3

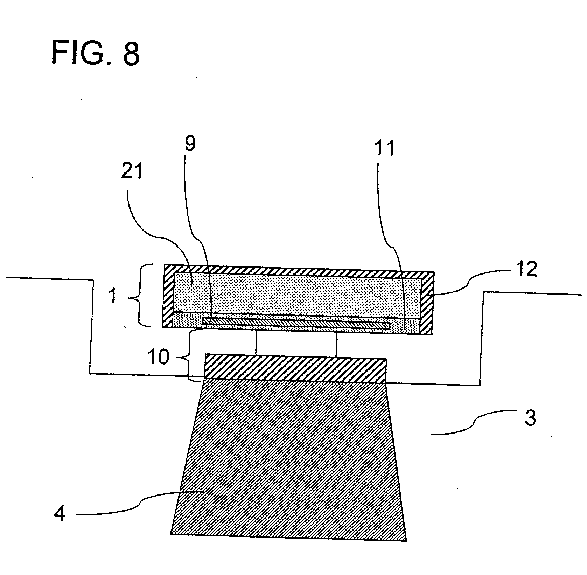

In Embodiments 1 and 2, the marker casing is configured from two members consisting of the upper casing unit 12 and the lower casing unit 13, but on the other hand, Embodiment 3 adopts a structure in which only the upper casing unit 12 exists and the lower casing unit 13 is omitted, as is shown in FIG. 8. Other structure is the same as that in Embodiment 1. That is, it is a structure in which the board sealing resin 11 configures the outer surface of the lower portion of the marker. Further, in a case where an antenna for performing communication with an on-vehicle side is arranged inside the electronic circuit board 9, there is a technical request to arrange the electronic circuit board to a position close to the upper surface of the marker in order to improve the communication performance. However, in view of the heat from the upper surface of the marker from solar radiation, there is a conflicting technical request to arrange the electronic circuit board 9 to a position away from the upper surface of the marker. As such, by configuring the board sealing resin 11 with a material with larger thermal conductivity than a solid insulating material 21 which covers the upper surface of the electronic circuit board 9, as is in the present Embodiment, it becomes possible to make the material arranged to the lower side of the electronic circuit board to be the material with higher thermal conductivity than the material arranged to the upper side of the electronic circuit board. With such configuration, it becomes possible to secure communication performance, suppress heat quantity transmitted from the upper surface of the marker to the electronic circuit board minimum, and at the same time effectively perform heat radiation from the lower surface side of the marker during heat generation from the circuit.

With such configuration, it becomes possible to arrange the electronic circuit board 9 even closer to the lower surface of the marker, compared to Embodiment 1 or 2. Therefore, it becomes possible to effectively promote the heat radiation from the lower surface side of the casing. Further, the number of components of the casing member may only be one, thereby contributing to reducing the cost of the product. Still further, there is no connecting portion between the casing units of the upper casing unit 12 and the lower casing unit 13 as is in Embodiment 1 or 2, so that it is an effective means for securing watertightness of the electronic circuit board 9. Moreover, although not shown in FIG. 8, by making the exterior side of the board sealing resin 11 in an uneven shape, it becomes possible to aim at improving the heat radiation effect from the lower side portion of the marker, by making the surface area of the lower side surface of the casing larger.

In the structure of Embodiment 1 or Embodiment 2, at the time of manufacture, it is possible to seal the electronic circuit board 9 by casting the board sealing resin 11 after fixing the electronic circuit board 9 to the lower casing unit 13, but in the present Embodiment with no lower casing unit, it is not possible to implement this manufacturing method. Therefore, in order to realize the structure of the present Embodiment, the desirable manufacturing method is preliminary filling the solid insulating material 21 such as a urethane foam to the upper casing unit 12 and secure the thickness of the insulating layer, thereafter installing the electronic circuit board 9 in a state maintaining a gap between itself and the solid insulating material 21, and thereafter casting the board sealing resin 11.

In the present structure, the board sealing resin 11 becomes exposed at the lower surface side of the marker, so the cooling performance is high compared to that of Embodiment 1. However, it has a characteristic that the strength with respect to collision of objects is low. Therefore, it is a structure suitable for a marker which is installed on a road surface with no possibility of collision of object from the lower surface of the marker.

### Embodiment 4

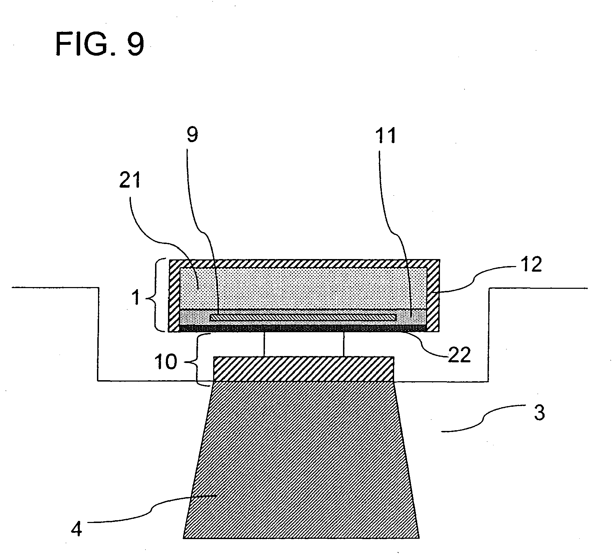

As is explained above, in Embodiment 3, the board sealing resin 11 is exposed at the lower surface side of the marker, so that the board protecting performance from collision of foreign objects being flicked by tires and the like during traveling of the vehicle drops, compared to Embodiment 1 and Embodiment 2, in a case where soft material is used as the board sealing resin 11. In order to supplement this drawback, Embodiment 4 adopts a structure in which a protecting unit 22 configured from a hard material is provided at the lower surface portion of the board sealing resin 11, as is shown in FIG 9. As a forming method of the protecting unit 22, a method of casting a hard resin such as epoxy resin, a method of fixing a preliminarily-shaped FRP board or a metal plate, and the like, may be given.

Other structure is similar to that in Embodiment 1.

### Reference Signs List

- 1: marker
- 2: bolt
- 3: road surface
- 4: base
- 5: material covering board
- 6: solar radiation
- 7: casing
- 8: heat conduction
- 9: electronic circuit board
- 10: mount
- 11: board sealing resin
- 12: upper casing unit
- 13: lower casing unit
- 14: insert
- 15: inner wall
- 16: unevenness unit
- 17: space
- 18: joining surface end unit
- 19: projecting unit
- 20: separated antenna
- 21: solid insulating material
- 22: protecting unit
- 23: vehicle
- 24: on-vehicle antenna
- 25: wireless communication

## Claims

1. A marker (1) installed on ground, and which performs wireless communication with a wireless communication device mounted on a mobile body, comprising:
an electronic circuit board (9), the whole surface of which is covered with resin material (11) to seal the electronic circuit board (9);
an antenna (20) for wireless communication separated from the electronic circuit board (9), wherein the antenna (20) is not covered with the resin material; and
a casing which covers at least an upper side which is the mobile body side of the electronic circuit board (9);
wherein a first material or a space is provided between an upper side portion (12) of the casing and the electronic circuit board (9), and
a lower side from the electronic circuit board (9) is configured from a material with larger thermal conductivity than the first material or the space.

2. The marker according to Claim 1, wherein
the casing is configured so as to cover an upper surface unit and a side surface unit and a lower surface unit of the marker (1), and is divided into two components of a component in which the upper surface unit and the side surface unit are configured integrally, and a component configuring the lower surface unit, and
the antenna (20) is installed to the component configuring the lower surface unit of the casing.

3. The marker according to Claim 1 or 2, wherein the antenna (20) is installed to a height different from the electronic circuit board (9).

## Patentansprüche

1. Auf dem Boden installierter Marker (1), der drahtlose Kommunikation mit einer Drahtlos-Kommunikationsvorrichtung, die auf einem beweglichen Körper angebracht ist, ausführt, umfassend:
eine elektronische Leiterplatte (9), deren gesamte Oberfläche zum Abdichten der elektronischen Leiterplatte (9) mit Harzmaterial (11) bedeckt ist;
eine Antenne (20) zur drahtlosen Kommunikation, die von der elektronischen Leiterplatte (9) getrennt ist, wobei die Antenne (20) nicht mit dem Harzmaterial bedeckt ist; und
ein Gehäuse, das zumindest eine obere Seite abdeckt, welche die Beweglicher-Körperseite der elektronischen Leiterplatte (9) ist;
wobei ein erstes Material oder ein Zwischenraum zwischen einem oberen Seitenabschnitt (12) des Gehäuses und der elektronischen Leiterplatte (9) vorgesehen ist, und
wobei eine untere Seite von der elektronischen Leiterplatte (9) aus einem Material mit höherer Wärmeleitfähigkeit als das erste Material oder der Zwischenraum konfiguriert ist.

2. Marker gemäß Anspruch 1,
wobei das Gehäuse so konfiguriert ist, dass es eine obere Oberflächeneinheit und eine seitliche Oberflächeneinheit und eine untere Oberflächeneinheit des Markers (1) abdeckt, und in zwei Komponenten unterteilt ist: in eine Komponente, bei der die obere Oberflächeneinheit und die seitliche Oberflächeneinheit einstückig ausgebildet sind, und in eine Komponente, welche die untere Oberflächeneinheit konfiguriert, und
wobei die Antenne (20) an der Komponente installiert ist, welche die untere Oberflächeneinheit des Gehäuses konfiguriert.

3. Marker gemäß Anspruch 1 oder 2, wobei die Antenne (20) in einer Höhe installiert ist, die sich von der elektronischen Leiterplatte (9) unterscheidet.

## Revendications

1. Marqueur (1) installé sur le sol, et qui établit une communication sans fil avec un dispositif de communication sans fil monté sur un corps mobile, comprenant :
une carte de circuit électronique (9), dont toute la surface est recouverte d'un matériau de résine (11) pour sceller la carte de circuit électronique (9) ;
une antenne (20) de communication sans fil séparée de la carte de circuit électronique (9), dans lequel l'antenne (20) n'est pas recouverte du matériau de résine ; et
un boîtier qui recouvre au moins un côté supérieur qui est le côté de corps mobile de la carte de circuit électronique (9) ;
dans lequel un premier matériau ou un espace est prévu entre une partie latérale supérieure (12) du boîtier et la carte de circuit électronique (9), et
un côté inférieur de la carte de circuit électronique (9) est constitué d'un matériau présentant une conductivité thermique supérieure à celle du premier matériau ou de l'espace.

2. Marqueur selon la revendication 1, dans lequel
le boîtier est configuré de manière à recouvrir une unité de surface supérieure et une unité de surface latérale et une unité de surface inférieure du marqueur (1), et est divisé en deux composants d'un composant dans lequel l'unité de surface supérieure et l'unité de surface latérale sont configurée d'un seul tenant, et un composant configurant l'unité de surface inférieure, et
l'antenne (20) est installée sur le composant configurant l'unité de surface inférieure du boîtier.

3. Marqueur selon la revendication 1 ou 2, dans lequel l'antenne (20) est installée à une hauteur différente de la carte de circuit électronique (9).
